# EUROPEAN PATENT APPLICATION

(11) **EP 1 229 535 A2**
(43) Date of publication of application: **07.08.2002**
(21) Application number: 02001042.7
(22) Date of filing: 18.01.2002
(51) Int. Cl.: G11B 20/00

(54) **System and method of contents distribution, and contents distribution apparatus**

(30) Priority: 22.01.2001 JP 2001013177
(71) Applicant: MATSUSHITA ELECTRIC INDUSTRIAL CO., LTD., Kadoma-shi, Osaka-fu (JP)
(72) Inventor: Tsusaka, Yuko, Osaka-shi, Osaka-fu (JP); Kajimoto, Kazuo, Yokohama-shi, Kanagawa-ken (JP)
(74) Representative: Lang, Johannes, Dipl.-Ing.

(57) **Abstract**

There is provided a system and method of contents distribution, which realizes an efficient use of the memory resources within a contents distribution apparatus and the communication resources on the part of a terminal device. A content storage section (11) stores contents such as video data and information concerning predetermined special effects to be applied thereto in pairs. A content management data setting section (12) sets information such as reproduction conditions, billing conditions, and a special effects flag with respect to each content. A distribution content storage section (13) stores the contents and information associated therewith. A distribution content selection section (14) selects information to be appended to a content for transmission in accordance with processing ability information which is supplied from a terminal device (2). The content and the selected information are transmitted to the terminal device (2) via transmission/reception sections (15, 21) and a network (3), so as to be stored in a distribution content storage section (22). A reproduction control section (23) reproduces the content according to the presence or absence of the special effects flag in the stored information.

## Description

### BACKGROUND OF THE INVENTION

### Field of the Invention

The present invention relates to a system and method of contents distribution, and a contents distribution apparatus. More particularly, the present invention relates to a system and method of contents distribution which is capable of appending conditions of use to contents to be distributed, e.g., video data and/or music data, and an apparatus used in such a system and method for distributing contents.

### Description of the Background Art

In recent years, services for distributing contents such as video data and/or music data to terminal devices, e.g., personal computers or mobile phones, have been launched. Such services can be generally classified into paid services (which allow contents to be distributed only if a fee is paid previously or subsequently) and unpaid services (which allow contents to be distributed without requiring any sort of payments).

In a paid service, it is commonplace to prepare an alternative version for each content to be distributed. Such an alternative version is typically prepared so as to include certain image effects and/or sound effects (hereinafter referred to as "special effects") applied to the original content, but only to an extent where the effects still allow a subscriber to confirm the substance of the content. For this reason, such alternative versions will hereinafter be referred to as "restricted contents". A restricted content will be provided to subscribers together with conditions of use for the original content (e.g., billing conditions regarding purchase of the content).

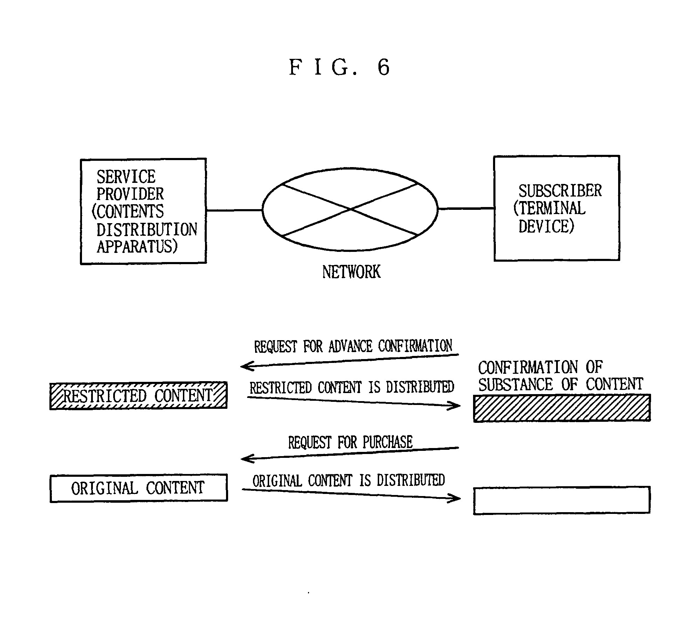

FIG. 6 is a chart illustrating the construction of a conventional contents distribution system and flows of contents distribution under a paid service.

In FIG. 6, a subscriber (terminal device) who desires to confirm the substance of a content before purchasing it (i.e., before paying a fee therefor) first obtains a restricted content from a service provider (contents distribution apparatus) via a network. Thus, the subscriber may confirm the substance of the restricted content as well as the accompanying conditions of use (billing conditions) . Then, if the subscriber wishes to purchase the content, the subscriber will satisfy the conditions of use, and then newly obtain the original content from the service provider.

However, under the above-described conventional contents distribution system, it is necessary for the service provider (i.e., the contents distribution apparatus) to retain two versions for the same content, i.e., the original content and a restricted content. This essentially means the same content being retained at the service provider in duplicate, which results in a waste of memory resources of the contents distribution apparatus.

On the part of the subscriber (i.e., the terminal device) who wishes to purchase a content after previously confirming the substance thereof, it is necessary to first obtain a restricted content and then the original content. This essentially means the same content being obtained ("downloaded") in duplicate. Thus, extra communication time and costs are incurred by the subscriber in order to obtain the two versions of the same content.

Furthermore, in the case where terminal devices having different processing abilities with respect to special effects are present within the same system, it is impossible to realize an efficient contents distribution which accounts for the different processing abilities of the terminal devices, because a restricted content having the same data size will indiscriminately be distributed to each terminal device.

The aforementioned problems will arise unless separate data is provided to accompany a content for distribution, the separate data being used for applying or not applying special effects to the content as desired by the service provider.

### SUMMARY OF THE INVENTION

Therefore, an object of the present invention is to provide a system and method of contents distribution, which realizes an efficient use of the memory resources within a contents distribution apparatus and the communication resources on the part of a terminal device by appending data exclusively concerning a special effect and information (management data) which is capable of controlling the special effect to an original content to be distributed, such that the data exclusively concerning special effect is adapted in accordance with the processing ability of the terminal device. Another object of the present invention is to provide a contents distribution apparatus which can selectively control the application of a special effect to a distributed content in accordance with conditions of use stipulated for that content.

The present invention has the following features to attain the object above.

A first aspect of the present invention is directed to a contents distribution system for distributing a content including video and/or music data from a contents distribution apparatus to a terminal device via a network, wherein the contents distribution apparatus comprises: a content storage section operable to store a content and specific data concerning a predetermined special effect to be applied to the content, the content and the specific data being stored as a pair; a content management data setting section operable to set management data, wherein the management data at least contains a flag indicating whether or not to apply the predetermined special effect to the content during reproduction, and conditions of use which need to be satisfied in order to reproduce the content without the predetermined special effect; and a transmission section operable to transmit the content, the specific data, and the management data to the terminal device, wherein the terminal device comprises: a reception section operable to receive the content, the specific data, and the management data from the transmission section; and a reproduction control section operable to reproduce the content with or without the predetermined special effect in accordance with the specific data and the presence or absence of the flag in the management data, and to reset the flag when the conditions of use contained in the management data are satisfied.

Thus, according to the first aspect, an original content and specific data associated with the original content are separately prepared, and the original content and the specific data are distributed to the terminal device together with management data which includes a flag indicating whether or not to apply a special effect when the content is reproduced. As a result, the utility of memory resources in the contents distribution apparatus can be improved. In addition, the utility of communication resources on the part of the terminal device can be improved because, once a content is received, it is possible to reproduce the content with or without a special effect as stipulated.

In the contents distribution system, preferably, the specific data is special effects data which is generated based on information concerning a type of the predetermined special effect and a portion of the content to apply the predetermined special effect to; and when the flag indicates that the predetermined special effect must be applied, the reproduction control section in the terminal device reproduces the content by applying the special effects data to the content.

Thus, by transmitting to the terminal device "special effects data", which does not require any additional processing for realizing special effects, it becomes possible even for a terminal device having a relatively low processing ability to reproduce the content with or without the special effect as stipulated.

Alternatively in the contents distribution system, preferably, the specific data is attribute data consisting of information concerning a type of the predetermined special effect and a portion of the content to apply the predetermined special effect to; and when the flag indicates that the predetermined special effect must be applied, the reproduction control section in the terminal device utilizes further data to generate special effects data in accordance with the type and the portion specified by the attribute data, the further data being previously stored in the reproduction control section for realizing special effects, and reproduces the content by applying the special effects data to the content.

Thus, by transmitting to the terminal device small-sized "attribute data", which only specifies the type of the predetermined special effect and the portion of the content to apply the special effect to, and by allowing the terminal device to generate special effects data based thereupon, it becomes possible to efficiently utilize communication resources.

In the contents distribution system, preferably, the contents distribution apparatus further comprises a content selection section operable to select, as the specific data, either special effects data which is generated based on information concerning a type of the predetermined special effect and a portion of the content to apply the predetermined special effect to, or attribute data consisting of the information concerning the type and the portion, such that the special effects data is selected for said terminal device having a relatively low processing ability and the attribute data is selected for said terminal device having a relatively high processing ability, wherein, when the flag indicates that the predetermined special effect must be applied, the reproduction control section in said terminal device having a relatively low processing ability reproduces the content by applying the special effects data to the content; and when the flag indicates that the predetermined special effect must be applied, the reproduction control section in said terminal device having a relatively high processing ability utilizes further data to generate special effects data in accordance with the type and the portion specified by the attribute data, the further data being previously stored in the reproduction control section for realizing special effects, and reproduces the content by applying the special effects data to the content.

Thus, since the contents distribution apparatus can append either special effects data or attribute data to an original content for distribution in accordance with the processing ability of the terminal device, it is possible to construct an efficient contents distribution system even if the system includes terminal devices having different processing abilities with respect to special effects.

In this case, preferably, the content selection section in the contents distribution apparatus selects the specific data to be appended to the content based on processing ability information which is supplied from the terminal device.

Thus, the system can dynamically adapt to situations where a further terminal device (s) is added to the system, or where the processing ability of the terminal device changes.

The contents distribution apparatus may further comprise a data storage section operable to store the management data.

Thus, by storing the management data which has been set, it becomes possible to easily reuse the management data for other contents as well.

Moreover, the contents distribution apparatus may further comprise a distribution content reproduction confirmation section operable to reproduce for confirmation the content with or without the predetermined special effect in accordance with the flag in the management data set by the content management data setting section.

Thus, it becomes possible at the contents distribution apparatus to confirm how a content will be reproduced in accordance with the management data which is set by the content management data setting section.

A second aspect of the present invention is directed to a contents distribution method for distributing a content including video and/or music data from a contents distribution apparatus to a terminal device via a network, wherein the contents distribution apparatus performs: a step of storing a content and specific data concerning a predetermined special effect to be applied to the content, the content and the specific data being stored as a pair; a step of setting management data, wherein the management data at least contains a flag indicating whether or not to apply the predetermined special effect to the content during reproduction, and conditions of use which need to be satisfied in order to reproduce the content without the predetermined special effect; and a step of transmitting the content, the specific data, and the management data to the terminal device, wherein the terminal device performs: a step of receiving the content, the specific data, and the management data from the contents distribution apparatus; a step of reproducing the content with or without the predetermined special effect in accordance with the specific data and the presence or absence of the flag in the management data; and a step of resetting the flag when the conditions of use contained in the management data are satisfied.

In the contents distribution method, preferably, the specific data is special effects data which is generated based on information concerning a type of the predetermined special effect and a portion of the content to apply the predetermined special effect to; and when the flag indicates that the predetermined special effect must be applied, the step of reproducing the content which is performed by the terminal device reproduces the content by applying the special effects data to the content.

Alternatively in the contents distribution method, preferably, the specific data is attribute data consisting of information concerning a type of the predetermined special effect and a portion of the content to apply the predetermined special effect to; and when the flag indicates that the predetermined special effect must be applied, the step of reproducing the content which is performed by the terminal device utilizes further data to generate special effects data in accordance with the type and the portion specified by the attribute data, the further data being previously stored in the terminal device for realizing special effects, and reproduces the content by applying the special effects data to the content.

In the contents distribution method, preferably, the contents distribution apparatus further performs a step of selecting, as the specific data, either special effects data which is generated based on information concerning a type of the predetermined special effect and a portion of the content to apply the predetermined special effect to, or attribute data consisting of the information concerning the type and the portion, such that the special effects data is selected for said terminal device having a relatively low processing ability and the attribute data is selected for said terminal device having a relatively high processing ability, wherein, when the flag indicates that the predetermined special effect must be applied, the step of reproducing the content which is performed by said terminal device having a relatively low processing ability reproduces the content by applying the special effects data to the content; and when the flag indicates that the predetermined special effect must be applied, the step of reproducing the content which is performed by said terminal device having a relatively high processing ability utilizes further data to generate special effects data in accordance with the type and the portion specified by the attribute data, the further data being previously stored in the terminal device for realizing special effects, and reproduces the content by applying the special effects data to the content.

In this case, preferably, the step of selecting the specific data which is performed by the contents distribution apparatus selects the specific data to be appended to the content based on processing ability information which is supplied from the terminal device.

The contents distribution apparatus may further perform a step of storing the management data.

Moreover, the contents distribution apparatus may further perform a step of reproducing for confirmation the content with or without the predetermined special effect in accordance with the flag in the management data set by the step of setting management data.

By applying the contents distribution method according to the second aspect of the present invention to an existing system, it would be possible to construct a contents distribution system according to the first aspect of the present invention so as to attain the aforementioned effects.

A third aspect of the present invention is directed to a contents distribution apparatus for distributing a content including video and/or music data to a terminal device via a network, comprising: a content storage section operable to store a content and specific data concerning a predetermined special effect to be applied to the content, the content and the specific data being stored as a pair; a content management data setting section operable to set management data, wherein the management data at least contains a flag indicating whether or not to apply the predetermined special effect to the content during reproduction, and conditions of use which need to be satisfied in order to reproduce the content without the predetermined special effect; and a transmission section operable to transmit the content, the specific data, and the management data to the terminal device.

In the contents distribution apparatus, preferably, the specific data is special effects data which is generated based on information concerning a type of the predetermined special effect and a portion of the content to apply the predetermined special effect to.

Alternatively in the contents distribution apparatus, preferably, the specific data is attribute data consisting of information concerning a type of the predetermined special effect and a portion of the content to apply the predetermined special effect to.

Preferably, the contents distribution apparatus further comprises a content selection section operable to select, as the specific data, either special effects data which is generated based on information concerning a type of the predetermined special effect and a portion of the content to apply the predetermined special effect to, or attribute data consisting of the information concerning the type and the portion, such that the special effects data is selected for said terminal device having a relatively low processing ability and the attribute data is selected for said terminal device having a relatively high processing ability.

In this case, preferably, the content selection section selects the specific data to be appended to the content based on processing ability information which is supplied from the terminal device.

The contents distribution apparatus may further comprise a data storage section operable to store the management data.

Moreover, the contents distribution apparatus may further comprise a distribution content reproduction confirmation section operable to reproduce for confirmation the content with or without the predetermined special effect in accordance with the flag in the management data set by the content management data setting section.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the configuration of a contents distribution system according to one embodiment of the present invention;
FIG. 2 is a chart illustrating a flow of contents distribution in a contents distribution system according to one embodiment of the present invention (in the case where the terminal device has a relatively low processing ability);
FIG. 3 is a chart illustrating a flow of contents distribution in a contents distribution system according to one embodiment of the present invention (in the case where the terminal device has a relatively high processing ability) ;
FIG. 4 is a view showing an exemplary edition image under the control of a content management data setting section 12 shown in FIG. 1;
FIG. 5 is a block diagram illustrating an alternative structure of a contents distribution apparatus 1 employed in a contents distribution system according to one embodiment of the present invention; and
FIG. 6 is a chart illustrating the construction of a conventional contents distribution system and flows of contents distribution under a paid service.

### DESCRIPTION OF THE PREFERRED EMBODIMENTS

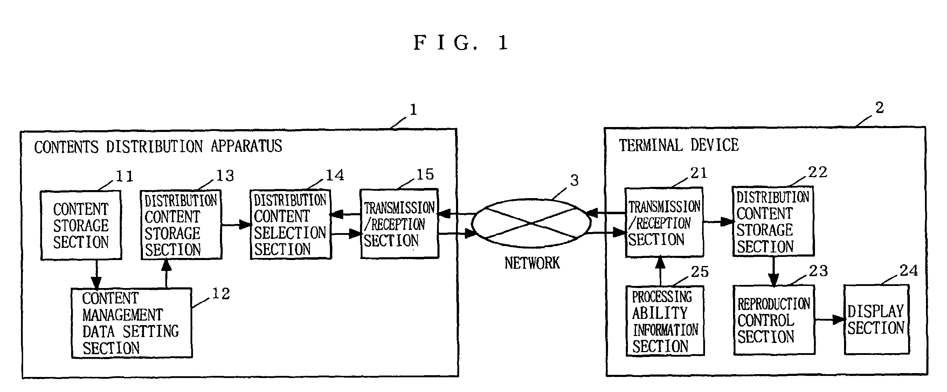

FIG. 1 is a block diagram illustrating the configuration of a contents distribution system according to one embodiment of the present invention. In FIG. 1, the contents distribution system according to the present embodiment includes a contents distribution apparatus 1 (as a service provider) and a terminal device 2 (as a subscriber), which are coupled to each other via a network 3. The contents distribution apparatus 1 includes a content storage section 11, a content management data setting section 12, a distribution content storage section 13, a distribution content selection section 14, and a transmission/reception section 15. The terminal device 2 includes a transmission/reception section 21, a distribution content storage section 22, a reproduction control section 23, a display section 24, and a processing ability information section 25.

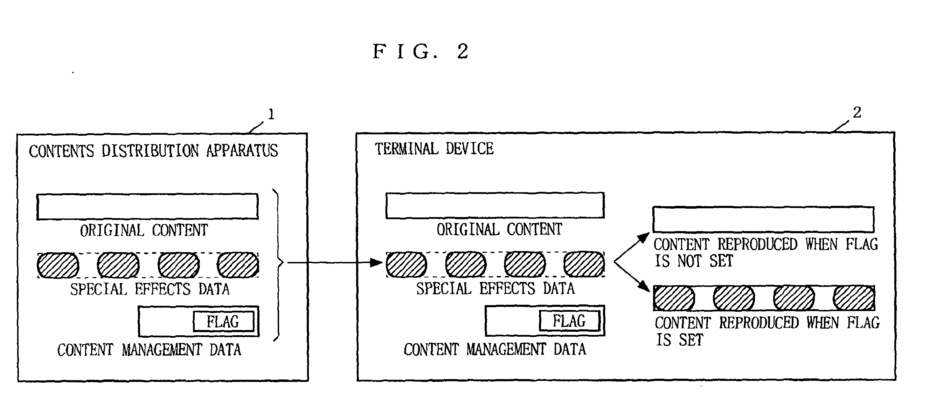

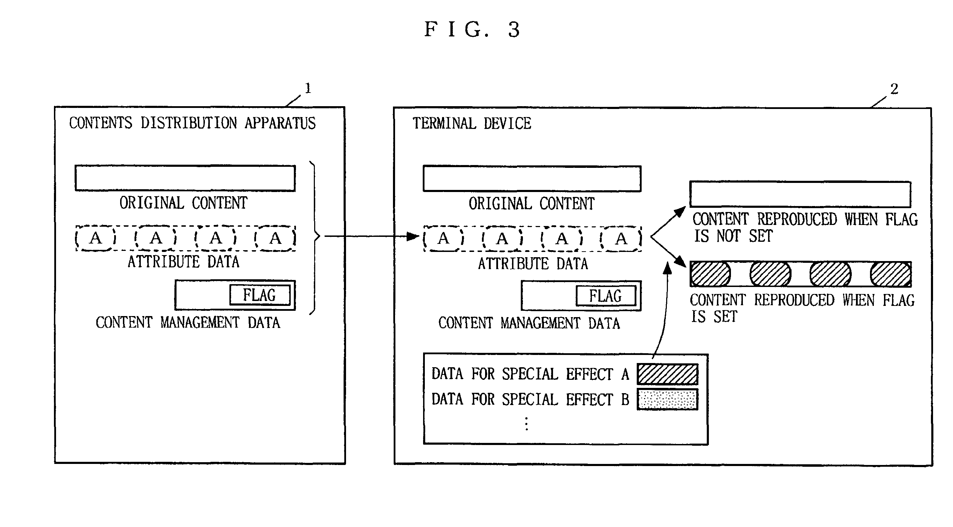

FIGS. 2 and 3 are charts illustrating flows of contents distribution in a contents distribution system according to one embodiment of the present invention.

Hereinafter, with reference to FIGS. 1 to FIG. 3, the system and method of contents distribution and the contents distribution apparatus 1 according to the present invention will be described. The following description will be directed to an exemplary case where video data is distributed as a content.

First, the contents distribution apparatus 1 will be described.

The content storage section 11, which is a storage medium such a hard disk, stores contents and special effects data in pairs. Specifically, each pair comprises a content (original content), e.g., video data and/or music data, and special effects data for providing a predetermined special effect (s) for that content. As used herein, the "special effects" may be applied to an original content in order to provide interesting image processing effects and/or sound processing effects. Examples of image processing effects, i.e., effects that can be applied to images, include mosaic effects, monochrome effects, strobe effects, negative/positive inversion effects, posterization effects, and color correction effects. As used herein, the "special effects data" for a given content is defined as data generated based on information concerning the type of the predetermined special effect and a portion of the content to apply the special effect to. By applying the special effects data to an original content (which may involve processing such as superimposition, substitution, and other calculations) , the predetermined special effect can be exerted on the original content. The exact type of special effect to be used on a content may be arbitrarily decided depending on the substance of the content. It may also be arbitrarily decided which portion of a content such a special effect will be applied to.

In accordance with an instruction by an operator or the like, the content management data setting section 12 obtains a designated content from the content storage section 11, and sets content management data. The content management data comprises reproduction conditions, billing conditions, and a special effects flag. As used herein, the "reproduction conditions" may stipulate, for example: "conditional reproduction", under which a content can be reproduced without special effects only if a fee is paid therefor; or "unconditional reproduction", under which contents can be reproduced with no special effects without paying a fee. The "billing conditions" may stipulate a fee which is required to cancel the special effect in the case of conditional reproduction. The "special effects flag" is a flag which indicates the presence or absence of special effects. For example, the special effects flag may indicate with a value "1" that the content associated therewith will be reproduced with a special effect applied thereto.

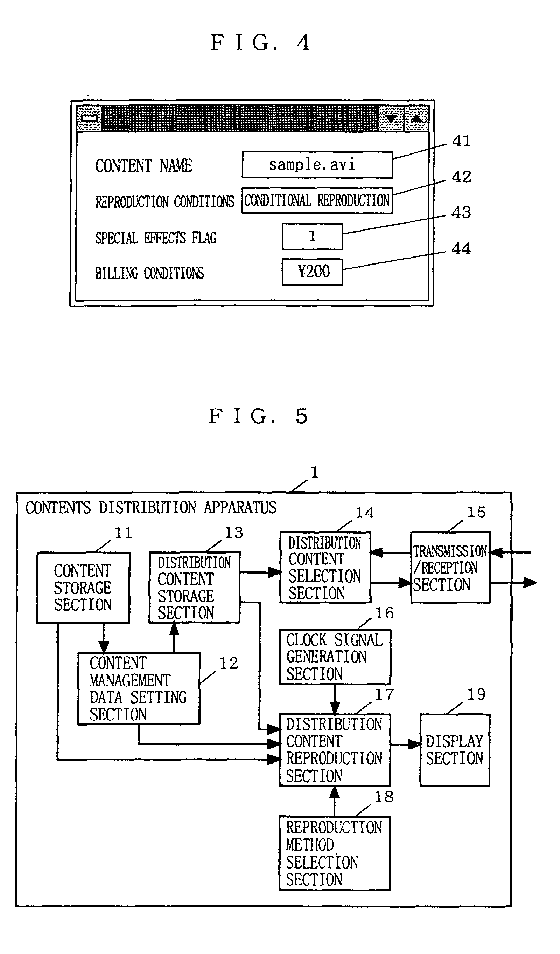

The above-described content management data may be set by an operator using an edition function as shown in FIG. 4, for example. In the exemplary case illustrated in FIG. 4, content management data which stipulates payment of a fee as a requirement for reproducing an original content is being generated. An input field 41 displays the name of the designated (obtained) content. The operator in this case has inputted "conditional reproduction" in an input field 42, a special effects flag "1" in an input field 43, and a fee of "¥200" in an input field 44, thereby setting content management data for the designated content.

The content, the special effects data to be appended thereto, and the content management data which has been set by means of the content management data setting section 12 are stored in the distribution content storage section 13. Alternatively, only the content management data which has been set may be stored in the distribution content storage section 13, separately from the content and special effects data. In that case, the operator does not need to newly input data in the content management data setting section 12 in order to set content management data with respect to other contents; rather, it is possible to reuse the content management data which is already stored in the distribution content storage section 13.

In accordance with processing ability information (described later) which is contained in a request for distribution transmitted from the terminal device 2, the distribution content selection section 14 selects data to be appended to a content for transmission to the terminal device 2 from within the distribution content storage section 13. Specifically, if the processing ability information indicates that the terminal device 2 which is to receive the distributed content is a device having a relatively low processing ability (e.g., a mobile phone), the distribution content selection section 14 selects the special effects data and the content management data as the data to be appended to the content. On the other hand, if the processing ability information indicates that the terminal device 2 which is to receive the distributed content is a device having a relatively high processing ability (e.g., a personal computer), the distribution content selection section 14 extracts, from the special effects data, information concerning the type of the predetermined special effect and a portion of the content to apply the special effect to (the extracted information will hereinafter be referred to as "attribute data"); then, the distribution content selection section 14 selects the extracted attribute data and the content management data as the data to be appended to the content.

The transmission/reception section 15 receives a request for distribution which is transmitted from the terminal device 2. In response to the received request for distribution, the transmission/reception section 15 appends either one of the special effects data or the attribute data selected by the distribution content selection section 14 and the content management data to the content for distribution, and transmits them to the terminal device 2 via the network 3 (FIGS. 2 and 3).

Next, the terminal device 2 will be described.

The terminal device 2 may have a relatively high processing ability or a relatively low processing ability (defined below), and the component elements thereof function in different manners depending on the processing ability. As used herein, a "relatively high processing ability" typically refers to the ability to reproduce a special effect in real time and with a high speed, as well as abundant capacity for storing data concerning special effects, etc. The threshold line between a "a relatively high processing ability" and a "a relatively low processing ability" can be arbitrarily defined depending on the purposes.

### (Operation of component elements of a terminal device 2 having a relatively low processing ability)

In the case of a terminal device 2 having a relatively low processing ability, the processing ability information section 25 previously stores processing ability information indicating that the terminal device 2 has a relatively low processing ability. When the reproduction of a given content is desired, the transmission/reception section 21 transmits a request for distribution of that content to the contents distribution apparatus 1, with the processing ability information stored in the processing ability information section 25 being contained in the request. Then, via the network 3, the transmission/reception section 21 receives an original content as requested, together with the associated special effects data and content management data, all of which are transmitted from the contents distribution apparatus 1 in accordance with the processing ability information of the terminal device 2. The distribution content storage section 22 stores the original content, special effects data, and content management data which have been received by the transmission/reception section 21.

Based on the special effects flag in the content management data stored in the distribution content storage section 22, the reproduction control section 23 reproduces the content as follows. If the value of the special effects flag is "1", the reproduction control section 23 applies the special effects data to the original content so that the content is reproduced with the predetermined special effect applied thereto (FIG. 2). On the other hand, if the value of the special effects flag is "0", the reproduction control section 23 reproduces the original content with no special effects applied thereto (FIG. 2). As soon as the subscriber pays the fee which is stipulated in the billing conditions, the reproduction control section 23, which has been reproducing the content with the predetermined special effect applied thereto, resets the special effects flag to "0", and thereafter reproduces the original content with no special effects applied thereto. The display section 24 displays the content reproduced by the reproduction control section 23.

### (Operation of component elements of a terminal device 2 having a relatively high processing ability)

In the case of a terminal device 2 having a relatively high processing ability, the processing ability information section 25 previously stores processing ability information indicating that the terminal device 2 has a relatively high processing ability. When the reproduction of a given content is desired, the transmission/reception section 21 transmits a request for distribution of that content to the contents distribution apparatus 1, with the processing ability information stored in the processing ability information section 25 being contained in the request. Then, via the network 3, the transmission/reception section 21 receives an original content as requested, together with the associated attribute data and content management data, all of which are transmitted from the contents distribution apparatus 1 in accordance with the processing ability information of the terminal device 2. The distribution content storage section 22 stores the original content, attribute data, and content management data which have been received by the transmission/reception section 21.

Data which are necessary for realizing various special effects are previously stored in the reproduction control section 23 of a terminal device 2 having a relatively high processing ability. Based on the special effects flag in the content management data and the attribute data stored in the distribution content storage section 22, the reproduction control section 23 reproduces the content as follows. If the value of the special effects flag is "1", the reproduction control section 23 utilizes the aforementioned necessary data stored therein to generate special effects data corresponding to the type and portion specified by the attribute data, and applies the generated special effects data to the original content so that the content is reproduced with the predetermined special effect applied thereto (FIG. 3). On the other hand, if the value of the special effects flag is "0", the reproduction control section 23 reproduces the original content with no special effects applied thereto (FIG. 3). As soon as the subscriber pays the fee which is stipulated in the billing conditions, the reproduction control section 23, which has been reproducing the content with the predetermined special effect applied thereto, resets the special effects flag to "0", and thereafter reproduces the original content with no special effects applied thereto. The display section 24 displays the content reproduced by the reproduction control section 23.

As shown in FIG. 5, the above-described contents distribution apparatus 1 may be further modified to additionally include a clock signal generation section 16, a distribution content reproduction section 17, a reproduction method selection section 18, and a display section 19, whereby it becomes possible to confirm the settings of the content management data at the contents distribution apparatus 1 as follows.

First, the reproduction method selection section 18 selects either a reproduction method assuming that a fee has already been paid or a reproduction method assuming that a fee has not been paid yet. In synchronization with a clock signal, i.e., time information which is outputted from the clock signal generation section 16, the distribution content reproduction section 17 reproduces the content for distribution which is stored in the distribution content storage section 13. Specifically, in the case where the reproduction method assuming that a fee has already been paid is selected, the distribution content reproduction section 17 reproduces the relevant content with no special effects applied thereto. On the other hand, in the case where the reproduction method assuming that a fee has not been paid yet is selected, the distribution content reproduction section 17 reproduces the relevant content with a predetermined special effect applied thereto. In either case, the reproduced content is displayed by the display section 19.

Thus, in the system and method of contents distribution according to one embodiment of the present invention, an original content and special effects data associated with the original content are separately prepared, and the original content and the special effects are distributed to the terminal device 2 together with content management data which includes a special effects flag indicating whether or not to apply a special effect when the content is reproduced. As a result, the utility of memory resources in the contents distribution apparatus 1 can be improved. In addition, the utility of communication resources on the part of the terminal device 2 can be improved because, once a content is received, it is possible to reproduce the content with or without a special effect as stipulated.

Since the contents distribution apparatus 1 can append either special effects data or attribute data to an original content for distribution in accordance with the processing ability of the terminal device 2, it is possible to construct an efficient contents distribution system even if the system includes terminal devices 2 having different processing abilities with respect to special effects.

By additionally incorporating a clock signal generation section 16, a distribution content reproduction section 17, a reproduction method selection section 18, and a display section 19 in the contents distribution apparatus 1as described above, it becomes possible to confirm how a content will be reproduced in accordance with the content management data which has been set by means of the content management data setting section 12.

Furthermore, by only storing the content management data which has been set by means of the content management data setting section 12 in the distribution content storage section 13, it becomes possible to allow the content management data to be easily reused for other contents as well.

Although the above-described embodiment illustrates an example where the content management data comprises reproduction conditions, billing conditions, and a special effects flag, the content management data may optionally comprise, for example, "copying conditions" which stipulate whether or not a content may be copied to another hard disk after distribution.

Although the above-described embodiment illustrates an example where processing ability information is supplied from the terminal device 2 to the contents distribution apparatus 1, it would be unnecessary to supply the processing ability information in the case where the processing ability of the terminal device to which a content is distributed is known in advance based on an address of the terminal device or the like.

In the above-described embodiment, the contents distribution apparatus 1 is illustrated as comprising the distribution content selection section 14. However, the distribution content selection section 14 may be omitted by ensuring that special effects data is stored in the distribution content storage section 13 if all of the terminal devices 2 composing the system have a relatively low processing ability, and that attribute data is stored in the distribution content storage section 13 if all of the terminal devices 2 composing the system have a relatively high processing ability.

While the invention has been described in detail, the foregoing description is in all aspects illustrative and not restrictive. It is understood that numerous other modifications and variations can be devised without departing from the scope of the invention.

## Claims

1. A contents distribution system for distributing a content including video and/or music data from a contents distribution apparatus to a terminal device via a network,
wherein the contents distribution apparatus (1) comprises:
a content storage section (11) operable to store a content and specific data concerning a predetermined special effect to be applied to the content, the content and the specific data being stored as a pair;
a content management data setting section (12) operable to set management data, wherein the management data at least contains a flag indicating whether or not to apply the predetermined special effect to the content during reproduction, and conditions of use which need to be satisfied in order to reproduce the content without the predetermined special effect; and
a transmission section (15) operable to transmit the content, the specific data, and the management data to the terminal device (2),
wherein the terminal device (2) comprises:
a reception section (21) operable to receive the content, the specific data, and the management data from the transmission section (15); and
a reproduction control section (23) operable to reproduce the content with or without the predetermined special effect in accordance with the specific data and the presence or absence of the flag in the management data, and to reset the flag when the conditions of use contained in the management data are satisfied.

2. The contents distribution system according to claim 1,
wherein the specific data is special effects data which is generated based on information concerning a type of the predetermined special effect and a portion of the content to apply the predetermined special effect to; and
when the flag indicates that the predetermined special effect must be applied, the reproduction control section (23) in the terminal device (2) reproduces the content by applying the special effects data to the content.

3. The contents distribution system according to claim 1,
wherein the specific data is attribute data consisting of information concerning a type of the predetermined special effect and a portion of the content to apply the predetermined special effect to; and
when the flag indicates that the predetermined special effect must be applied, the reproduction control section (23) in the terminal device (2) utilizes further data to generate special effects data in accordance with the type and the portion specified by the attribute data, the further data being previously stored in the reproduction control section for realizing special effects, and reproduces the content by applying the special effects data to the content.

4. The contents distribution system according to claim 1, wherein the contents distribution apparatus (1) further comprises a content selection section (14) operable to select, as the specific data, either special effects data which is generated based on information concerning a type of the predetermined special effect and a portion of the content to apply the predetermined special effect to, or attribute data consisting of the information concerning the type and the portion, such that the special effects data is selected for said terminal device (2) having a relatively low processing ability and the attribute data is selected for said terminal device (2) having a relatively high processing ability,
wherein, when the flag indicates that the predetermined special effect must be applied, the reproduction control section (23) in said terminal device (2) having a relatively low processing ability reproduces the content by applying the special effects data to the content; and
when the flag indicates that the predetermined special effect must be applied, the reproduction control section (23) in said terminal device (2) having a relatively high processing ability utilizes further data to generate special effects data in accordance with the type and the portion specified by the attribute data, the further data being previously stored in the reproduction control section for realizing special effects, and reproduces the content by applying the special effects data to the content.

5. The contents distribution system according to claim 4, wherein the content selection section (14) in the contents distribution apparatus (1) selects the specific data to be appended to the content based on processing ability information which is supplied from the terminal device (2).

6. The contents distribution system according to claim 1, wherein the contents distribution apparatus (1) further comprises a data storage section operable to store the management data.

7. The contents distribution system according to claim 1, wherein the contents distribution apparatus (1) further comprises a distribution content reproduction confirmation section (16 to 19) operable to reproduce for confirmation the content with or without the predetermined special effect in accordance with the flag in the management data set by the content management data setting section (12).

8. A contents distribution method for distributing a content including video and/or music data from a contents distribution apparatus to a terminal device via a network,
wherein the contents distribution apparatus performs:
a step of storing a content and specific data concerning a predetermined special effect to be applied to the content, the content and the specific data being stored as a pair;
a step of setting management data, wherein the management data at least contains a flag indicating whether or not to apply the predetermined special effect to the content during reproduction, and conditions of use which need to be satisfied in order to reproduce the content without the predetermined special effect; and
a step of transmitting the content, the specific data, and the management data to the terminal device,
wherein the terminal device performs:
a step of receiving the content, the specific data, and the management data from the contents distribution apparatus;
a step of reproducing the content with or without the predetermined special effect in accordance with the specific data and the presence or absence of the flag in the management data; and
a step of resetting the flag when the conditions of use contained in the management data are satisfied.

9. The contents distribution method according to claim 8,
wherein the specific data is special effects data which is generated based on information concerning a type of the predetermined special effect and a portion of the content to apply the predetermined special effect to; and
when the flag indicates that the predetermined special effect must be applied, the step of reproducing the content which is performed by the terminal device reproduces the content by applying the special effects data to the content.

10. The contents distribution method according to claim 8,
wherein the specific data is attribute data consisting of information concerning a type of the predetermined special effect and a portion of the content to apply the predetermined special effect to; and
when the flag indicates that the predetermined special effect must be applied, the step of reproducing the content which is performed by the terminal device utilizes further data to generate special effects data in accordance with the type and the portion specified by the attribute data, the further data being previously stored in the terminal device for realizing special effects, and reproduces the content by applying the special effects data to the content.

11. The contents distribution method according to claim 8, wherein the contents distribution apparatus further performs a step of selecting, as the specific data, either special effects data which is generated based on information concerning a type of the predetermined special effect and a portion of the content to apply the predetermined special effect to, or attribute data consisting of the information concerning the type and the portion, such that the special effects data is selected for said terminal device having a relatively low processing ability and the attribute data is selected for said terminal device having a relatively high processing ability,
wherein, when the flag indicates that the predetermined special effect must be applied, the step of reproducing the content which is performed by said terminal device having a relatively low processing ability reproduces the content by applying the special effects data to the content; and
when the flag indicates that the predetermined special effect must be applied, the step of reproducing the content which is performed by said terminal device having a relatively high processing ability utilizes further data to generate special effects data in accordance with the type and the portion specified by the attribute data, the further data being previously stored in the terminal device for realizing special effects, and reproduces the content by applying the special effects data to the content.

12. The contents distribution method according to claim 11, wherein the step of selecting the specific data which is performed by the contents distribution apparatus selects the specific data to be appended to the content based on processing ability information which is supplied from the terminal device.

13. The contents distribution method according to claim 8, wherein the contents distribution apparatus further performs a step of storing the management data.

14. The contents distribution method according to claim 8, wherein the contents distribution apparatus further performs a step of reproducing for confirmation the content with or without the predetermined special effect in accordance with the flag in the management data set by the step of setting management data.

15. A contents distribution apparatus for distributing a content including video and/or music data to a terminal device via a network, comprising:
a content storage section (11) operable to store a content and specific data concerning a predetermined special effect to be applied to the content, the content and the specific data being stored as a pair;
a content management data setting section (12) operable to set management data, wherein the management data at least contains a flag indicating whether or not to apply the predetermined special effect to the content during reproduction, and conditions of use which need to be satisfied in order to reproduce the content without the predetermined special effect; and
a transmission section (15) operable to transmit the content, the specific data, and the management data to the terminal device (2).

16. The contents distribution apparatus according to claim 15,
wherein the specific data is special effects data which is generated based on information concerning a type of the predetermined special effect and a portion of the content to apply the predetermined special effect to.

17. The contents distribution apparatus according to claim 15,
wherein the specific data is attribute data consisting of information concerning a type of the predetermined special effect and a portion of the content to apply the predetermined special effect to.

18. The contents distribution apparatus according to claim 15, further comprising a content selection section (14) operable to select, as the specific data, either special effects data which is generated based on information concerning a type of the predetermined special effect and a portion of the content to apply the predetermined special effect to, or attribute data consisting of the information concerning the type and the portion, such that the special effects data is selected for said terminal device (2) having a relatively low processing ability and the attribute data is selected for said terminal device (2) having a relatively high processing ability.

19. The contents distribution apparatus according to claim 18, wherein the content selection section (14) selects the specific data to be appended to the content based on processing ability information which is supplied from the terminal device (2).

20. The contents distribution apparatus according to claim 15, further comprising a data storage section operable to store the management data.

21. The contents distribution apparatus according to claim 15, further comprising a distribution content reproduction confirmation section (16 to 19) operable to reproduce for confirmation the content with or without the predetermined special effect in accordance with the flag in the management data set by the content management data setting section.
